# EUROPEAN PATENT SPECIFICATION

(11) **EP 4 290 656 B1**
(45) Date of publication and mention of the grant of the patent: **15.07.2026**
(21) Application number: 22911894.8
(22) Date of filing: 20.12.2022
(51) Int. Cl.: H01M 50/204, H01M 50/249, H01M 10/42, H01M 50/251, H01M 50/262, H01M 50/271, H01M 50/289, H01M 50/258, H01M 50/209, H01M 10/052, H01M 50/298

(54) **BATTERY PACK**
BATTERIEPACK
BLOC-BATTERIE

(30) Priority: 20.12.2021 KR 20210183245
(43) Date of publication of application: 13.12.2023
(73) Proprietor: LG ENERGY SOLUTION, LTD., Seoul 07335 (KR)
(72) Inventor: SHIN, Jong-Chan, Daejeon 34122 (KR); CHOI, Byung-Hyuk, Daejeon 34122 (KR); KIM, Ki-Youn, Daejeon 34122 (KR)
(74) Representative: Plasseraud IP
(86) International application number: PCT/KR2022/020893
(87) International publication number: WO 2023/121261

(56) References cited:
- EP-A1- 2 704 168
- EP-A1- 2 911 216
- EP-A1- 4 329 079
- KR-A- 20120 002 874
- KR-A- 20120 002 874
- KR-A- 20130 001 970
- KR-A- 20130 003 575
- KR-A- 20150 019 697
- KR-B1- 101 608 333
- US-A1- 2021 313 630

## Description

### TECHNICAL FIELD

The present application claims priority to Korean Patent Application No. 10-2021-0183245 filed on December 20, 2021 in the Republic of Korea.

The present invention relates to a battery pack according to independent claim 1. Preferred embodiments are defined in the dependent claims

### BACKGROUND ART

Currently, commercially available secondary batteries include nickel-cadmium batteries, nickel-hydrogen batteries, nickel-zinc batteries, lithium secondary batteries and the like. Among them, lithium secondary batteries have little or no memory effect, and are gaining more attention than nickel-based secondary batteries as recharging can be done whenever it is convenient. Further, lithium secondary batteries provide a low self-discharge rate with high energy density capability.

The lithium secondary batteries mainly use a lithium-based oxide and a carbon material as a positive electrode active material and a negative electrode active material, respectively. In addition, the lithium secondary batteries include an electrode assembly including a positive electrode plate and a negative electrode plate respectively coated with the positive electrode active material and the negative electrode active material and a separator interposed between the positive electrode plate and the negative electrode plate, and a hermetically sealed packaging or battery case in which the electrode assembly is received together with an electrolyte solution.

According to the shape of the battery case, lithium secondary batteries may be classified into can-type secondary batteries in which the electrode assembly is included in a metal can and pouch-type secondary batteries in which the electrode assembly is included in a pouch made of an aluminum laminate sheet.

The secondary batteries are widely used in not only small devices such as mobile electronic devices but also medium- and large-scale devices such as electric vehicles or Energy Storage Systems (ESSs), and the use is growing fast. Further, recently, home ESSs are widely used to store and supply power for use in houses or buildings. The essential component of the home ESSs is a battery pack.

Various types of battery packs including battery packs used in home ESSs include a plurality of battery cells (secondary batteries) to increase the capacity and/or output. In particular, there is a need for ESSs that are flexible to change the configuration of battery packs to satisfy various customer needs. Additionally, there is a need for ESSs that can adapt the shape to a variety of limited installation spaces.

US2012/0003505A1 discloses a battery pack including one or more battery cells arranged in one direction and electrically connected to one another.

### DISCLOSURE

### Technical Problem

The present invention is designed to solve these and other problems.

The present invention is directed to providing a battery pack that can change the number of battery modules.

The present invention is further directed to providing a battery pack that can change the number of processing units.

The present invention is further directed to providing a battery pack that can change the appearance.

The present invention is further directed to providing a battery pack including a corner cover to cover a corner between an adjacent battery module or an adjacent processing unit and a battery module.

The present invention is further directed to providing a battery pack with improved productivity and assembly through component sharing.

### Technical Solution

To achieve the above-described objective, a battery pack according to the present invention includes a battery module; a processing unit having a corner formed by two side plates and an opening at the corner, wherein the processing unit is electrically connected to the battery module and controls charge/discharge of the battery module; and a corner cover which is coupled to the corner and covers the opening; and off a cable which passes through the opening, and electrically connects the battery module to the processing unit.

The battery pack may further include a front cover which is disposed on a front surface of the processing unit and covers a front side of the corner cover.

The corner cover may include a protruding portion which protrudes toward the front side and is inserted into the front cover.

The battery module may be disposed at rear of the processing unit, and the battery pack may further include a coupling member, wherein one side of the coupling member is secured to the corner of the processing unit and an opposite side of the coupling member is secured to the corner of the battery module.

The corner cover may be coupled to the coupling member slidably movably in a front-rear direction.

The corner cover may cover said one side of the coupling member.

The corner cover may include a hook which protrudes from an inner surface and is coupled to the coupling member.

The corner cover may be a first corner cover, and the battery pack may further include a second corner cover which is coupled to the corner of the battery module, and covers the opposite side of the coupling member.

The first corner cover may further include a groove on a rear side, and the second corner cover may include a second protruding portion which protrudes toward a front side and is inserted into the groove.

The opening may be a first opening, the battery module may have a second opening at the corner to which the coupling member is secured, the battery pack may further include a cable which passes through the first opening and the second opening, and the second corner cover may cover the second opening and the cable.

To achieve the above-described objective, an energy storage system according to the present invention includes the battery pack according to the present invention.

### Advantageous Effects

According to at least one of the embodiments of the present disclosure, there may be provided the battery pack that can change the number of battery modules.

According to at least one of the embodiments of the present disclosure, there may be provided the battery pack that can change the number of processing units.

According to at least one of the embodiments of the present disclosure, there may be provided the battery pack that can change the appearance.

According to at least one of the embodiments of the present disclosure, there may be provided the battery pack including the corner cover to cover the corner between the adjacent battery module or the adjacent processing unit and the battery module.

According to at least one of the embodiments of the present disclosure, there may be provided the battery pack with improved productivity and assembly through component sharing.

### DESCRIPTION OF DRAWINGS

The accompanying drawings illustrate an exemplary embodiment of the present disclosure, and together with the following detailed description, serve to provide a further understanding of the technical aspect of the present disclosure, and thus, the present disclosure should not be construed as being limited to the drawings.
FIG. 1 is a perspective view of a battery pack according to an embodiment of the present disclosure.
FIG. 2 is a partial exploded view of a battery pack according to an embodiment of the present disclosure.
FIG. 3 is a partial enlarged view of a battery pack according to an embodiment of the present disclosure.
FIG. 4 is a partial enlarged exploded view of a battery pack according to an embodiment of the present disclosure.
FIG. 5 is a partial cross-sectional view of FIG. 3, taken along the line B-B'.
FIG. 6 is a partial cross-sectional view of FIG. 3, taken along the line C-C'.
FIGS. 7 to 9 are diagrams of a corner cover of a battery pack according to an embodiment of the present disclosure.
FIG. 10 is a diagram of a corner cover and an installation bracket of a battery pack according to an embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made thereto at the time that the application was filed.

The term such as first, second or the like may be used herein. These terms are used to distinguish one element from another, and the nature, order or sequence of the stated elements is not limited by the term.

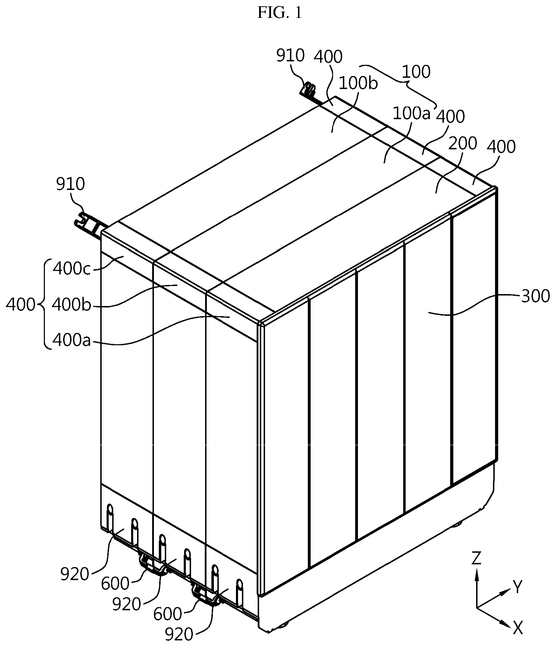

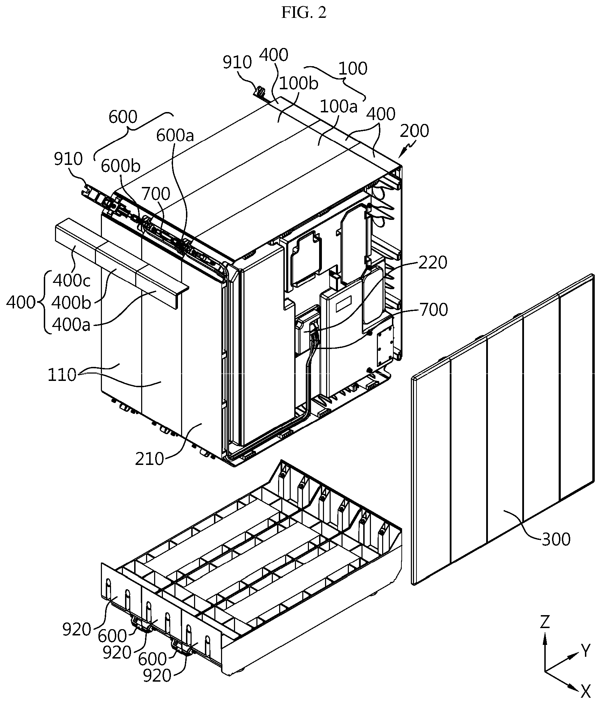

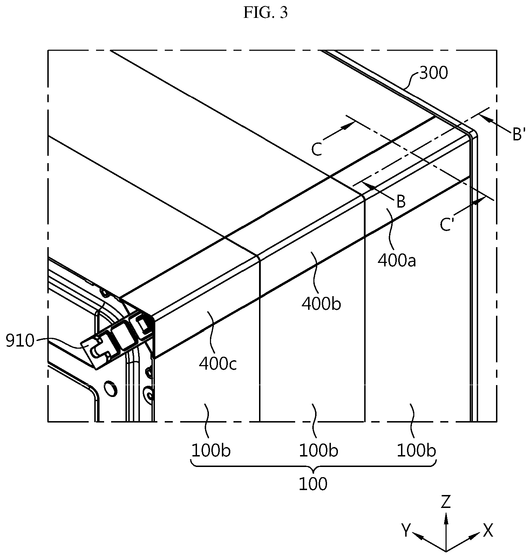

FIG. 1 is a perspective view of a battery pack according to an embodiment of the present disclosure. FIG. 2 is a partial exploded view of the battery pack according to an embodiment of the present disclosure. FIG. 3 is a partial enlarged view of the battery pack according to an embodiment of the present disclosure. Referring to FIGS. 1 to 3, the battery pack according to an embodiment of the present disclosure may include a battery module 100, a processing unit 200 and a corner cover 400.

The battery module 100 may have a first corner 111 formed by two side plates and a first opening 112 at the first corner 111. The battery module 100 may have a cuboidal shape. A housing 110 may form an appearance of the battery module 100. The housing 110 of the battery module 100 may include a front plate and four side plates. Additionally, the four side plates of the housing 110 may form four corners 111. The four corners may be chamfered. Alternatively, the corner 111 may be a plate connecting two side plates. Alternatively, the corner 111 may be formed by two side plates. The corner 111 may have the opening 112. The opening 112 may be open to the front side or in the X-axis direction. The four corners 111 may have substantially identical shape. The battery module 100 may include a plurality of battery cells inside. In this instance, the battery cell may be a secondary battery. The battery module 100 may charge the battery cell with power or discharge the power in the battery cell. The battery pack may include a plurality of battery modules 100 according to the amount of power or output required. For example, the battery pack may include two battery modules 100a, 100b as shown in FIG. 1.

The processing unit 200 may be disposed in front of the battery module 100a, and control the charge/discharge of the battery module 100. The processing unit 200 may include a second corner 211 near the first corner 111, and a second opening 212 at the second corner 211. The processing unit 200 may have a cuboidal shape. A housing 210 may form an appearance of the processing unit 200. The appearance or size of the processing unit 200 and the battery module 100 may be very similar or substantially identical to each other. The housing 210 of the processing unit 200 may include a front plate and four side plates. Additionally, the four side plates of the housing 210 may form four corners 211. The four corners 211 may be chamfered. Alternatively, the corner 211 may be a plate connecting two side plates. Alternatively, the corner 211 may be formed by two side plates. The corner 211 may have the opening 212. The opening 212 may be open to the front side or in the X-axis direction. The four corners 211 may have substantially identical shape. The processing unit 200 may be electrically connected, joined or coupled to the plurality of battery modules 100. The processing unit 200 may control the charge/discharge of the battery module 100. Additionally, the processing unit 200 may detect and acquire condition information of the battery module 100. The battery pack may include a plurality of processing units 200 to control the plurality of battery modules 100.

For example, the battery pack may include two battery modules 100 and one processing unit 200 as shown in FIG. 1. The two battery modules 100 and one processing unit 200 may be electrically connected to each other. The processing unit 200 may control the charge/discharge of three battery modules 100, and acquire or detect condition information of the three battery modules 100 such as voltage or temperature. Each corner 111 of the battery module 100 and each corner 211 of the processing unit 200 may have substantially identical shape.

The corner cover 400 may be coupled to the corner 211 of the processing unit 200. Additionally, the corner cover 400 may cover the opening 212 of the processing unit 200. The corner cover 400 may be referred to as a single corner cover 400. The single corner cover 400 may be configured to be coupled to any of the four corners 111 of the battery module 100 and the four corners 211 of the processing unit 200.

According to this configuration of the present disclosure, the battery pack may include various combinations of at least one battery module 100 and at least one processing unit 200. Additionally, the battery module 100 and the processing unit 200 of the battery pack may have various positional relationships or connection relationships. Accordingly, it is possible to flexibly respond to various amounts of power or outputs required for the battery pack. Additionally, as the appearance of the battery pack may be adaptable, the battery pack may be free of the limitation of the space in which the battery pack is installed.

Additionally, according to this configuration of the present disclosure, the single corner cover 400 may cover the corner 111 of the adjacent battery module 100 and the corner 211 of the processing unit 200 to protect the internal parts of the battery pack. The battery module 100 and the processing unit 200 may have the openings 112, 212 for connection to an external configuration, and in case where the openings 112, 212 are exposed, the inside may be damaged by impurity infiltration. The single corner cover 400 may cover the openings 112, 212 to protect the inside of the battery module 100 or the processing unit 200. Accordingly, it is possible to improve the safety and life of the battery pack.

Additionally, according to this configuration of the present disclosure, the single corner cover 400 may prevent sunlight from entering the battery module 100 or the processing unit 200 through the openings 112, 212 when the battery pack is installed outdoors. Accordingly, it is possible to improve the safety and life of the battery pack.

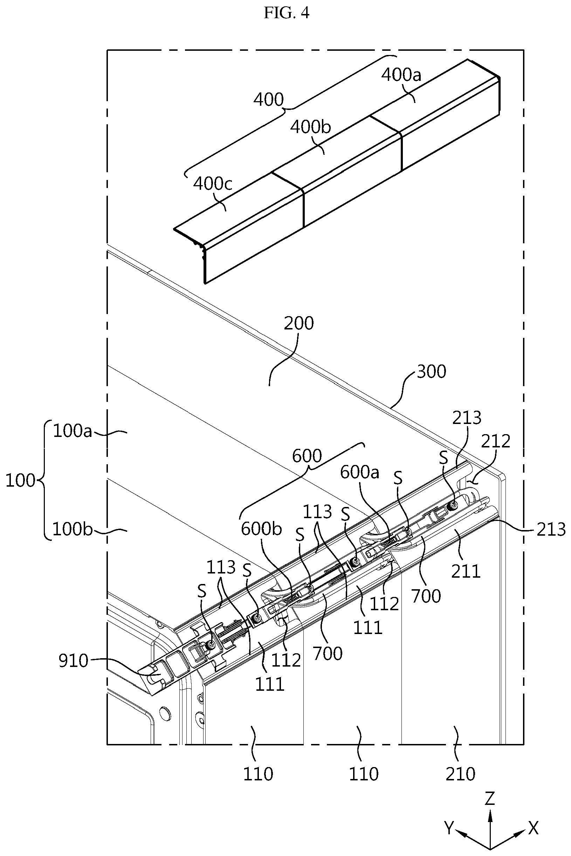

FIG. 4 is a partial enlarged exploded view of the battery pack according to an embodiment of the present disclosure. Referring to FIGS. 2 to 4, the battery pack according the present invention further includes a cable 700 that passes through the opening 212 and electrically connects the battery module 100 to the processing unit 200.

Additionally, the cable 700 may electrically connect two battery modules 100. Additionally, in the case where the battery pack includes a plurality of processing units 200, the cable 700 may electrically connect two processing units 200. A plurality of cables 700 may be included. The cable 700 may convey the power or a signal. The at least one battery module 100 and the at least one processing unit 200 of the battery pack may be arranged in various patterns. The cable 700 may be configured to pass through the openings 112, 212 at the corners 111, 211 disposed at a location at which it is easy to electrically connect the battery module 100 to the processing unit 200. The cable 700 may pass through the openings 112, 212 at the corners 111, 211 of any one of the battery module 100 and the processing unit 200 and then the openings 112, 212 at the corners 111, 211 of the other one.

The single corner cover 400 may cover the cable 700. The cable 700 and the openings 112, 212 may be covered by the single corner cover 400.

According to this configuration of the present disclosure, the single corner cover 400 may cover the cable 700 to prevent the infiltration of impurities into the cable 700. Additionally, the single corner cover 400 may cover the cable 700 to prevent sunlight-induced damage to the cable 700. Accordingly, it is possible to improve the safety and life of the battery pack.

Referring to FIGS. 1 to 4, the battery module 100 of the battery pack according to an embodiment of the present disclosure may be disposed at the rear of the processing unit 200. Additionally, the battery pack may include a coupling member 600 having one side secured to the corner 211 of the processing unit 200 and the other side secured to the corner 111 of the battery module 100.

A plurality of battery modules 100 may be included. A first battery module 100a may be disposed at the rear of the processing unit 200. A second battery module 100b may be disposed at the rear of the first battery module 100a. The coupling member 600a may couple the processing unit 200 to the first battery module 100a. Additionally, the coupling member 600b may couple the first battery module 100a and the second battery module 100b. The coupling member 600 may be secured to the corners 111, 211 on one side and the other side by a fastening member S. The coupling member 600 may be configured to be secured to any of the four corners of the battery module 100 and the four corners of the processing unit 200.

For example, referring to FIG. 4, the coupling member 600a may be secured, on one side, to the corner 211 of the processing unit 200, and may be secured, on the other side, to the corner 111 of the first battery module 100a. Additionally, the coupling member 600b may be secured, on one side, to the corner 111 of the first battery module 100a, and may be secured, on the other side, to the corner 111 of the second battery module 100b.

According to this configuration of the present disclosure, the coupling member 600 may stably connect, couple or secure the battery module 100 and the processing unit 200 of the battery pack.

Referring to FIGS. 3 and 4, the battery pack according to an embodiment of the present disclosure may include a front cover 300 that is disposed on the front surface of the processing unit 200 and covers the front side of the corner cover 400.

The front cover 300 may be disposed on the front surface of the processing unit 200. Alternatively, the front cover 300 may be secured or coupled to the front plate or the front surface of the processing unit 200. The front cover 300 may have a larger area than the front surface or the front plate of the processing unit 200. The processing unit 200 may have a port 220 on the front surface or the front plate. The cable 700 may be connected to the port 220. The processing unit 200 may be electrically connected to the adjacent battery module 100 or the other processing unit 200 through the port 220. The front cover 300 may cover the port 220 and the cable 700 connected to the port 220.

Additionally, the front cover 300 may cover the front side of the single corner cover 400. The front cover 300 may cover a space between the single corner cover 400 and the corner 211 of the processing unit 200.

According to this configuration of the present disclosure, the front cover 300 may cover the space between the single corner cover 400 and the corner 211 of the processing unit 200 to prevent the infiltration of impurities. Accordingly, it is possible to improve the safety and life of the battery pack.

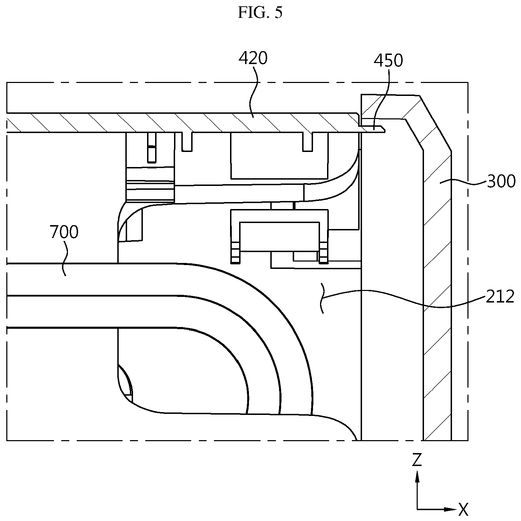

FIG. 5 is a partial cross-sectional view of FIG. 3, taken along the line B-B'. Referring to FIG. 5, the corner cover 400 of the battery pack according to an embodiment of the present disclosure may include a protruding portion 450 that protrudes toward the front side and is inserted into the front cover 300.

The single corner cover 400 may include the protruding portion 450 that protrudes toward the front side. The protruding portion 450 may be formed over a first part 410 and a second part 420.

The front cover 300 may form a space. The protruding portion 450 may be inserted into the space formed by the front cover 300. Alternatively, the protruding portion 450 may be inserted into the front cover 300.

According to this configuration of the present disclosure, the protruding portion 450 may cover a gap between the front cover 300 and the single corner cover 400, and prevent the infiltration of impurities into the gap between the front cover 300 and the single corner cover 400. Accordingly, it is possible to improve the safety and life of the battery pack.

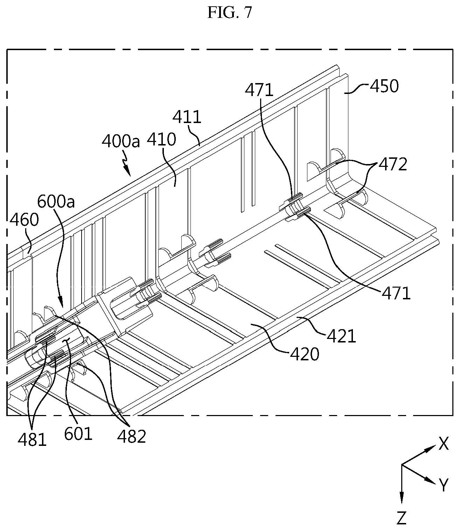

FIG. 7 is a diagram of the corner cover 400 of the battery pack according to an embodiment of the present disclosure. Referring to FIGS. 5 and 7, the corner cover 400 according to an embodiment of the present disclosure may be slidably coupled to the coupling member 600 in the front-rear direction. The single corner cover 400 may slidably move and come into close contact with the front cover 300. The protruding portion 450 of the single corner cover 400 may be inserted into the front cover 300.

According to this configuration of the present disclosure, the battery module 100 and the processing unit 200 may have the openings 112, 212 for connection to an external configuration, and the inside may be damaged by infiltration of impurities in the case where the openings 112, 212 are exposed. The single corner cover 400 may be slidably movably coupled to the coupling member to effectively prevent the infiltration of impurities into the battery pack. Accordingly, it is possible to protect the inside of the battery module 100 or the processing unit 200 and improve the safety and life of the battery pack.

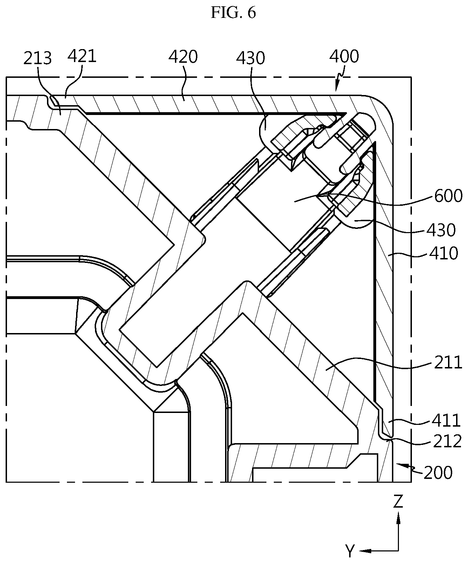

FIG. 6 is a partial cross-sectional view of FIG. 3, taken along the line C-C'. Referring to FIG. 6, the single corner cover 400 of the battery pack according to an embodiment of the present disclosure may include a seating portion 411 along the edge of the first part 410. Additionally, the single corner cover 400 may include a seating portion 421 along edge of the second part 420. The seating portions 411, 421 of the single corner cover 400 may be seated on a step portion 213 of the corner 211. The step portion 213 may support the seating portions 411, 421 of the single corner cover 400. Additionally, the single corner cover 400 may cover the opening 212 of the corner 211.

According to this configuration of the present disclosure, the single corner cover 400 may be seated on the first step portion 113 and the second step portion 213 to maintain the stable coupling with the battery module 100 or the processing unit 200. Accordingly, it is possible to improve the stability of the battery pack.

Referring to FIG. 7, the corner cover 400a according to an embodiment of the present disclosure may include hooks 471, 481 that protrude from the inner surface and are coupled to the coupling member 600a. The single corner cover 400a may have a bent plate shape. The single corner cover 400a may include the first part 410 and the second part 420. The first part 410 and the second part 420 may form a bent plate shape. For example, the first part 410 and the second part 420 may be vertically connected to each other.

The single corner cover 400a may include a first guide 482 that protrudes from the inner surface and the first hook 481. A pair of first guides 482 may be included. A pair of first hooks 481 may be included. Each of the pair of first guides 482 may be disposed in each of the first part 410 and the second part 420. Each of the pair of first hooks 481 may be disposed in each of the first part 410 and the second part 420.

The single corner cover 400a may include a second guide 472 that protrudes from the inner surface and the second hook 471. A pair of second guides 472 may be included. A pair of second hooks 471 may be included. The pair of second guides 472 may be respectively disposed in the first part 410 and the second part 420. The pair of second hooks 471 may be respectively disposed in the first part 410 and the second part 420.

The first hook 481 may be secured to the coupling member 600a. The first hook 481 may be secured to a hole 601 of the coupling member 600a. The coupling member 600a may have a pair of holes 601. The pair of first hooks 481 may be secured to one hole 601. The coupling member 600a may be disposed between the pair of first guides 482. The single corner cover 400 may be hook-coupled to the coupling member 600a and slidably move in the front-rea direction or X-axis direction. The hole 601 may be formed in the shape of a long hole along which the first guide 482 may slidably move. The first guide 482 may guide the single corner cover 400a to slidably move along the coupling member 600a.

According to this configuration of the present disclosure, the single corner cover 400a may be easily hook-coupled to the coupling member 600a without any fastening member. Accordingly, it is possible to improve the assembly and productivity of the battery pack.

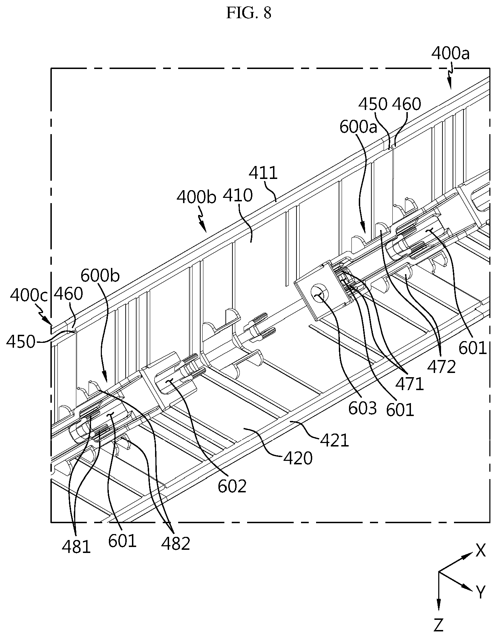

FIG. 8 is a diagram of the corner cover 400b of the battery pack according to an embodiment of the present disclosure. Referring to FIG. 8, the corner cover 400b according to an embodiment of the present disclosure may include the hooks 471, 481 that protrude from the inner surface and are coupled to the coupling members 600a, 600b.

The second hook 471 may be secured to the coupling member 600a. The second hook 471 may be secured to a hole 601 of the coupling member 600a. The coupling member 600a may have a pair of holes 601. The pair of second hooks 471 may be secured to one hole 601. The coupling member 600a may be disposed between the pair of second guides 472. The single corner cover 400b may be hook-coupled to the coupling member 600a, and slidably move in the front-rear direction or X-axis direction. The hole 601 may be formed in the shape of a long hole, along which the second guide 472 may slidably move. The second guide 472 may guide the single corner cover 400b to slidably move along the coupling member 600a.

The coupling member 600a may have holes 602, 603 on one side and the other side. The coupling member 600 may be secured to the corners 111, 211 by the fastening member S passing through the holes 602, 603. The hole 602 on one side may be open to the front side or in the X-axis direction. Due to this shape, the coupling member 600 may be easily secured to the corners 111, 211 in response to the tolerance occurring in the production process of the battery module 100 and the processing unit 200.

According to this configuration of the present disclosure, the single corner cover 400b may be easily hook-coupled to the coupling member 600a without any fastening member. Accordingly, it is possible to improve the assembly and productivity of the battery pack.

Referring to FIG. 8, the battery pack according to an embodiment of the present disclosure may include a first corner cover 400a and a second corner cover 400b. The first corner cover 400a may cover one side of the coupling member 600a, and the second corner cover 400b may cover the other side of the coupling member 600a. The first corner cover 400a and the second corner cover 400b may be the same component or part.

The two single corner covers 400a, 400b may be coupled to one coupling member 600a. Additionally, one coupling member 600a may be covered by the two single corner covers 400a, 400b.

According to this configuration of the present disclosure, as the two single corner covers 400a, 400b are coupled to one coupling member 600a, it is possible to reduce the number of components. Accordingly, it is possible to improve the assembly and productivity of the battery pack.

Referring to FIG. 8, the first corner cover of the battery pack according to an embodiment of the present disclosure may include a groove on the rear side, and the second corner cover may include a second protruding portion that protrudes toward the front side and is inserted into the groove.

The single corner covers 400a, 400b may have the groove 460 on the rear side. The groove 460 may be formed over the first part 410 and the second part 420. The groove 460 may have a corresponding shape to the protruding portion 450. The second single corner cover 400b may be hook-coupled to the coupling members 600a, 600b and slidably move. By the sliding movement, the protruding portion 450 of the second single corner cover 400b may be inserted into the groove 460 of the first single corner cover 400a.

According to this configuration of the present disclosure, it is possible to prevent a gap between the adjacent single corner covers 400a, 400b. Accordingly, it is possible to prevent the infiltration of impurities into the battery pack, and improve the safety and life of the battery pack.

Referring to FIGS. 3, 4 and 8, the processing unit 200 of the battery pack according to an embodiment of the present disclosure may have the first opening 212, and the battery module 100a may have the second opening 112. Additionally, the battery pack may include the cable 700 passing through the first opening 212 and the second opening 112. Additionally, the second corner cover 400b may cover the second opening 112 and the cable 700.

The cable 700 may pass through the opening 212 of the processing unit 200 and the opening 112 of the battery module 100a. The single corner covers 400a, 400b may cover the corner 211 of the processing unit 200 and the corner 111 of the battery module 100a. Additionally, the single corner covers 400a, 400b may cover the opening 212 of the processing unit 200 and the opening 112 of the battery module 100a. Additionally, the single corner covers 400a, 400b may cover the coupling members 600a, 600b. Additionally, the single corner covers 400a, 400b may cover the cable 700.

According to this configuration of the present disclosure, the single corner covers 400a, 400b may prevent the exposure of the corners 211, 111 of the processing unit 200 or the battery module 100a and the components adjacent to the corners 211, 111, and prevent the infiltration of external impurities. Accordingly, it is possible to improve the safety and life of the battery pack.

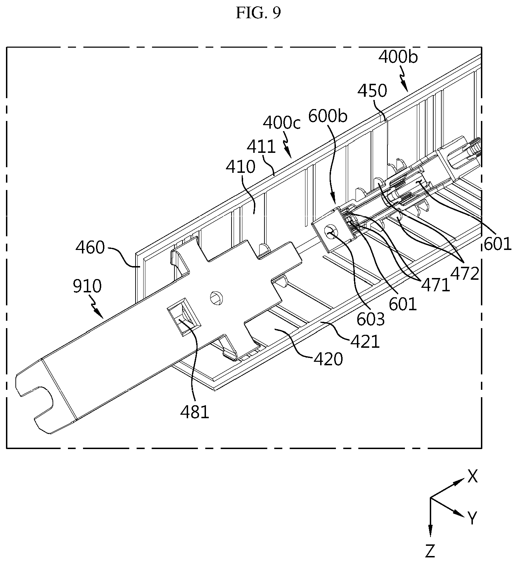

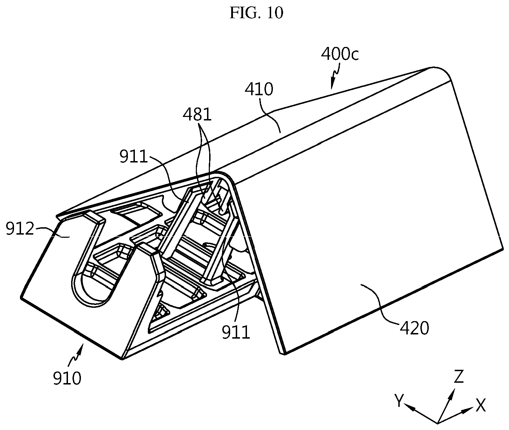

FIG. 9 is a diagram of the corner cover 400c of the battery pack according to an embodiment of the present disclosure. FIG. 10 is a diagram of the corner cover 400c and an installation bracket 910 of the battery pack according to an embodiment of the present disclosure. Referring to FIGS. 4, 9 and 10, the battery pack according to an embodiment of the present disclosure may include the installation bracket 910. The installation bracket 910 may be secured to the corner 111 of the battery module 100b by the fastening member S. The installation bracket 910 may secure the battery pack to a structure such as a wall.

The installation bracket 910 may include a coupling portion 911. The hook 481 of the single corner cover 400c may be coupled to the coupling portion 911. The coupling portion 911 may be disposed between the guides 482 of the single corner cover 400c. Additionally, the single corner cover 400c may cover at least part of the installation bracket 910.

Referring to FIG. 1, the battery pack may include a stand 920. The stand 920 may be disposed in each of the processing unit 200 and the battery module 100. The plurality of stands 920 may be connected, coupled or secured by the coupling member 600. The stand 920 may increase the height of the battery pack. When the battery pack is installed outdoors or on the ground, the battery pack may be damaged by rain. The battery pack may include the stand 920 to protect the battery module 100 or the processing unit 200.

Although the plurality of battery modules 100, 100a, 100b is described with different reference numerals for convenience of description, they have the same structure and shape. Additionally, although the coupling members 600, 600a, 600b are described with different reference numerals for convenience of description, they have the same structure and shape. Additionally, although the single corner covers 400, 400a, 400b are described with different reference numerals for convenience of description, they have the same structure and shape.

An energy storage system according to the present disclosure includes at least one battery pack according to the present disclosure. In addition to the battery pack, the energy storage system according to the present disclosure may further include components commonly included in energy storage systems. In particular, the energy storage system according to the present disclosure may be a home energy storage system or an energy storage system for buildings used to store energy in houses or buildings.

The terms indicating directions such as upper, lower, left, right, front and rear are used herein for convenience only, and it should be obvious to those skilled in the art that these terms may change depending on the position of the stated element or an observer.

While the present disclosure has been hereinabove described with regard to a limited number of embodiments and drawings, the present disclosure is not limited thereto, and it is apparent that a variety of changes and modifications may be made by those skilled in the art within the scope of the appended claims.

## Claims

1. A battery pack, comprising:
a battery module (100);
a processing unit (200) having a corner (211) formed by two side plates and an opening (212) at the corner, wherein the processing unit (200) is electrically connected to the battery module (100) and controls charge/discharge of the battery module;
a corner cover (400) which is coupled to the corner (212) and covers the opening (212); and
a cable (700) which passes through the opening (212), and electrically connects the battery module (100) to the processing unit (200).

2. The battery pack according to claim 1, further comprising:
a front cover (300) which is disposed on a front surface of the processing unit (200) and covers a front side of the corner cover (400).

3. The battery pack according to claim 2, wherein the corner cover (400) includes a protruding portion (450) which protrudes toward the front side and is inserted into the front cover (300).

4. The battery pack according to claim 1, wherein the battery module (100) is disposed at rear of the processing unit (200), and
wherein the battery pack further comprises a coupling member (600), wherein one side of the coupling member is secured to the corner (211) of the processing unit (200) and an opposite side of the coupling member (600) is secured to the corner (111) of the battery module (100).

5. The battery pack according to claim 4, wherein the corner cover (400) is coupled to the coupling member (600) slidably movably in a front-rear direction.

6. The battery pack according to claim 4, wherein the corner cover (400) covers said one side of the coupling member (600).

7. The battery pack according to claim 4, wherein the corner cover (400a) includes a hook (471, 481) which protrudes from an inner surface and is coupled to the coupling member (600a).

8. The battery pack according to claim 4, wherein the corner cover (400) is a first corner cover (400a), and
wherein the battery pack further comprises a second corner cover (400b) which is coupled to the corner (111) of the battery module (100), and covers the opposite side of the coupling member (600).

9. The battery pack according to claim 8, wherein the first corner cover (400a) further includes a groove (460) on a rear side, and
wherein the second corner cover (400b) includes a second protruding portion (450) which protrudes toward a front side and is inserted into the groove (460).

10. The battery pack according to claim 8, wherein the opening is a first opening (212),
wherein the battery module (100) has a second opening (112) at the corner to which the coupling member (600) is secured,
wherein the battery pack further comprises a cable (700) which passes through the first opening (212) and the second opening (112), and
wherein the second corner cover (400b) covers the second opening (112) and the cable (700).

11. An energy storage system comprising the battery pack according to any one of claims 1 to 10.

## Patentansprüche

1. Batteriepack, umfassend:
ein Batteriemodul (100);
eine Verarbeitungseinheit (200) mit einer Ecke (211), die durch zwei Seitenplatten gebildet wird, und einer Öffnung (212) an der Ecke, wobei die Verarbeitungseinheit (200) elektrisch mit dem Batteriemodul (100) verbunden ist und das Laden/Entladen des Batteriemoduls steuert;
eine Eckenabdeckung (400), die mit der Ecke (212) gekoppelt ist und die Öffnung (212) abdeckt; und
ein Kabel (700), das durch die Öffnung (212) verläuft und das Batteriemodul (100) elektrisch mit der Verarbeitungseinheit (200) verbindet.

2. Batteriepack nach Anspruch 1, ferner umfassend:
eine vordere Abdeckung (300), die an einer Vorderfläche der Verarbeitungseinheit (200) angeordnet ist und eine Vorderseite der Eckenabdeckung (400) abdeckt.

3. Batteriepack nach Anspruch 2, wobei die Eckenabdeckung (400) einen vorstehenden Abschnitt (450) enthält, der in Richtung der Vorderseite vorsteht und in die vordere Abdeckung (300) eingeführt ist.

4. Batteriepack nach Anspruch 1, wobei das Batteriemodul (100) an der Rückseite der Verarbeitungseinheit (200) angeordnet ist, und
wobei das Batteriepack ferner ein Kopplungselement (600) umfasst, wobei eine Seite des Kopplungselements an der Ecke (211) der Verarbeitungseinheit (200) befestigt ist und eine gegenüberliegende Seite des Kopplungselements (600) an der Ecke (111) des Batteriemoduls (100) befestigt ist.

5. Batteriepack nach Anspruch 4, wobei die Eckenabdeckung (400) mit dem Kopplungselement (600) gleitend beweglich in einer Vorwärts-Rückwärts-Richtung gekoppelt ist.

6. Batteriepack nach Anspruch 4, wobei die Eckenabdeckung (400) die eine Seite des Kopplungselements (600) abdeckt.

7. Batteriepack nach Anspruch 4, wobei die Eckenabdeckung (400a) einen Haken (471, 481) enthält, der von einer Innenfläche vorsteht und mit dem Kopplungselement (600a) gekoppelt ist.

8. Batteriepack nach Anspruch 4, wobei die Eckenabdeckung (400) eine erste Eckenabdeckung (400a) ist, und
wobei das Batteriepack ferner eine zweite Eckenabdeckung (400b) umfasst, die mit der Ecke (111) des Batteriemoduls (100) gekoppelt ist und die gegenüberliegende Seite des Kopplungselements (600) abdeckt.

9. Batteriepack nach Anspruch 8, wobei die erste Eckenabdeckung (400a) ferner eine Nut (460) auf einer Rückseite enthält, und
wobei die zweite Eckenabdeckung (400b) einen zweiten vorstehenden Abschnitt (450) enthält, der in Richtung einer Vorderseite vorsteht und in die Nut (460) eingeführt ist.

10. Batteriepack nach Anspruch 8, wobei die Öffnung eine erste Öffnung (212) ist,
wobei das Batteriemodul (100) eine zweite Öffnung (112) an der Ecke aufweist, an der das Kopplungselement (600) befestigt ist,
wobei das Batteriepack ferner ein Kabel (700) umfasst, das durch die erste Öffnung (212) und die zweite Öffnung (112) verläuft, und
wobei die zweite Eckenabdeckung (400b) die zweite Öffnung (112) und das Kabel (700) abdeckt.

11. Energiespeichersystem, das das Batteriepack nach einem der Ansprüche 1 bis 10 umfasst.

## Revendications

1. Bloc-batterie, comprenant :
un module de batterie (100) ;
une unité de traitement (200) ayant un coin (211) formé par deux plaques latérales et une ouverture (212) au niveau du coin, dans lequel l'unité de traitement (200) est connectée électriquement au module de batterie (100) et commande la charge/décharge du module de batterie ;
un couvercle de coin (400) qui est couplé au coin (212) et recouvre l'ouverture (212) ; et
un câble (700) qui passe à travers l'ouverture (212), et connecte électriquement le module de batterie (100) à l'unité de traitement (200).

2. Bloc-batterie selon la revendication 1, comprenant en outre :
un couvercle avant (300) qui est disposé sur une surface avant de l'unité de traitement (200) et recouvre un côté avant du couvercle de coin (400).

3. Bloc-batterie selon la revendication 2, dans lequel le couvercle de coin (400) inclut une partie saillante (450) qui fait saillie vers le côté avant et est insérée dans le couvercle avant (300).

4. Bloc-batterie selon la revendication 1, dans lequel le module de batterie (100) est disposé à l'arrière de l'unité de traitement (200), et
dans lequel le bloc-batterie comprend en outre un élément de couplage (600), dans lequel un côté de l'élément de couplage est fixé au coin (211) de l'unité de traitement (200) et un côté opposé de l'élément de couplage (600) est fixé au coin (111) du module de batterie (100).

5. Bloc-batterie selon la revendication 4, dans lequel le couvercle de coin (400) est couplé à l'élément de couplage (600) de manière mobile et coulissante selon une direction avant-arrière.

6. Bloc-batterie selon la revendication 4, dans lequel le couvercle de coin (400) recouvre ledit un côté de l'élément de couplage (600).

7. Bloc-batterie selon la revendication 4, dans lequel le couvercle de coin (400a) inclut un crochet (471, 481) qui fait saillie depuis une surface intérieure et est couplé à l'élément de couplage (600a).

8. Bloc-batterie selon la revendication 4, dans lequel le couvercle de coin (400) est un premier couvercle de coin (400a), et
dans lequel le bloc-batterie comprend en outre un second couvercle de coin (400b) qui est couplé au coin (111) du module de batterie (100), et recouvre le côté opposé de l'élément de couplage (600).

9. Bloc-batterie selon la revendication 8, dans lequel le premier couvercle de coin (400a) inclut en outre une rainure (460) sur un côté arrière, et
dans lequel le second couvercle de coin (400b) inclut une seconde partie saillante (450) qui fait saillie vers un côté avant et est insérée dans la rainure (460).

10. Bloc-batterie selon la revendication 8, dans lequel l'ouverture est une première ouverture (212),
dans lequel le module de batterie (100) a une seconde ouverture (112) au niveau du coin auquel l'élément de couplage (600) est fixé,
dans lequel le bloc-batterie comprend en outre un câble (700) qui passe à travers la première ouverture (212) et la seconde ouverture (112), et
dans lequel le second couvercle de coin (400b) recouvre la seconde ouverture (112) et le câble (700).

11. Système de stockage d'énergie comprenant le bloc-batterie selon l'une quelconque des revendications 1 à 10.
